# EUROPÄISCHE PATENTSCHRIFT

(11) **EP 2 930 357 B1**
(45) Veröffentlichungstag und Bekanntmachung des Hinweises auf die Patenterteilung: **27.06.2018**
(21) Anmeldenummer: 14164232.2
(22) Anmeldetag: 10.04.2014
(51) Int. Cl.: F03D 80/30, F03D 1/06, H02G 13/00

(54) **Windenergieanlagenrotorblatt mit einer Blitzrezeptorbasis**
Wind turbine rotor blade with a lightning conductor base
Pale de rotor d'éolienne dotée d'un récepteur de foudre

(43) Veröffentlichungstag der Anmeldung: 14.10.2015
(73) Patentinhaber: Nordex Energy GmbH, 22419 Hamburg (DE)
(72) Erfinder: Ohlerich, Nick, 18055 Rostock (DE)
(74) Vertreter: Hauck Patentanwaltspartnerschaft mbB

(56) Entgegenhaltungen:
- WO-A1-2011/080177
- CN-U- 202 628 403
- KR-A- 20100 115 139
- US-A1- 2006 280 613
- US-A1- 2007 081 900
- US-A1- 2013 149 154

## Beschreibung

Die Erfindung betrifft ein Windenergieanlagenrotorblatt mit zwei Blitzrezeptoren, die an einer Saug- und an einer Druckseite angeordnet sind, und einer in dem Windenergieanlagenrotorblatt angeordneten, einteilig ausgebildeten Blitzrezeptorbasis, an der die beiden Blitzrezeptoren und ein Blitzschutzleiter befestigt sind, sowie ein Verfahren zur Herstellung eines solchen Windenergieanlagenrotorblatts.

Es ist bekannt, Windenergieanlagenrotorblätter mit einer Blitzschutzeinrichtung vor Schäden durch einen Blitzschlag zu bewahren. Hierzu können mehrere Blitzrezeptoren am Rotorblatt angeordnet werden. Der Strom eines in einen solchen Blitzrezeptor einschlagenden Blitzes wird über einen Blitzschutzleiter zur Blattwurzel hin und von dort über die Gondel und den Turm der Windenergieanlage in den Erdboden abgeleitet.

Die Blitzrezeptoren und alle weiteren Elemente der Blitzschutzeinrichtung sollten so angeordnet werden, dass Blitze ausschließlich in die Blitzrezeptoren einschlagen. Jeder Blitzschlag an einem anderen Ort, sei es in ein anderes elektrisch leitfähiges Element des Windenergieanlagenrotorblatts wie beispielsweise eine Tragstruktur aus einem Kohlenstofffasermaterial, eine elektrische Heizeinrichtung oder eine sonstige elektrische Leitung, kann unter Umständen zu einer irreparablen Beschädigung des Rotorblatts führen. Dies gilt auch für Blitze, die in einem Abstand von einem Blitzschutzrezeptor in eine Blitzrezeptorbasis oder in den Blitzschutzleiter selbst einschlagen.

Aus der Druckschrift WO 2008/101506 A2 ist ein Windenergieanlagenrotorblatt mit zwei im Bereich der Blattspitze einander gegenüberliegend angeordneten Blitzrezeptoren bekannt geworden. Die Blitzrezeptoren sind mit jeweils einer Blitzrezeptorbasis verschraubt. Die beiden Rezeptorbasen sind über einen Bolzen miteinander gekoppelt und getrennt voneinander über elektrische Leitungen mit einem zentralen Blitzschutzleiter verbunden.
Aus der Druckschrift WO 2011/080177 A1 ist eine Blitzschutzeinrichtung für ein Windenergieanlagenrotorblatt bekannt geworden. Eine leitfähige Oberflächenbeschichtung dient als Blitzrezeptor und ist über Stangen elektrisch an einen im Inneren des Rotorblatts liegenden Blitzschutzleiter gekoppelt.
Aus der Druckschrift WO 2007/128314 A1 ist eine Blitzschutzeinrichtung für ein Windenergieanlagenrotorblatt bekannt geworden, bei dem einander gegenüberliegende Blitzrezeptoren über eine Stange an einen Blitzschutzleiter gekoppelt sind.
Aus der Druckschrift EP 1 965 076 A1 ist ein Windenergieanlagenrotorblatt bekannt geworden, bei dem im Bereich der Blattspitze zwei auf Druck- und Saugseite angeordnete Blitzrezeptoren mit einer einteilig ausgebildeten Blitzrezeptorbasis verschraubt sind. Die Blitzrezeptorbasis ist ein massiver, großvolumiger Block aus einem elektrisch leitfähigen Material.
Die Druckschrift US 2006/0280613 A1 zeigt ein Windenergieanlagenrotorblatt mit mehreren Blitzrezeptoren. Diese sind jeweils mit einem metallischen Verbindungselement verschraubt. Ein zusätzlicher Verbinder stellt eine elektrische Verbindung zwischen jeweils zwei Blitzrezeptoren und einem Blitzschutzleiter her.
Die Druckschrift US 2007/0081900 A1 zeigt ein Windenergieanlagenrotorblatt mit einer im Wesentlichen kastenförmigen Blitzrezeptorbasis. Ein weiteres Windenergieanlagenrotorblatt ist bekannt aus CN 202628403 U. Davon ausgehend ist es die Aufgabe der Erfindung, ein Windenergieanlagenrotorblatt mit zwei auf Druck- und Saugseite angeordneten Blitzrezeptoren, die beide an einer einteilig ausgebildeten Blitzrezeptorbasis befestigt sind, zur Verfügung zu stellen, das einfacher und kostengünstiger herzustellen ist und bei dem das Risiko eines Blitzschlags in einen anderen Bereich als in die Blitzrezeptoren verringert ist, sowie ein Verfahren zur Herstellung eines solchen Windenergieanlagenrotorblatts.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das Windenergieanlagenrotorblatt hat eine Blattwurzel, einen Blitzschutzleiter zur Ableitung eines Blitzstroms zur Blattwurzel, eine Saugseite, eine Druckseite, einen an der Saugseite angeordneten Blitzrezeptor, einen an der Druckseite angeordneten Blitzrezeptor und eine in dem Windenergieanlagenrotorblatt angeordnete, einteilig ausgebildete Blitzrezeptorbasis, an der die beiden Blitzrezeptoren und der Blitzschutzleiter befestigt sind. Die Blitzrezeptorbasis umfasst zwei Befestigungsringe, die jeweils ein Innengewinde, in das einer der beiden Blitzrezeptoren eingeschraubt ist, und einen Außendurchmesser aufweisen, wobei die Außenseiten der Befestigungsringe die in einem Abstand von weniger als einem Außendurchmesser voneinander angeordnet sind.

Das Windenergieanlagenrotorblatt kann für eine Windenergieanlage mit im Wesentlichen horizontaler Achse bestimmt sein. Es kann aus einem Faserverbundmaterial hergestellt sein, insbesondere aus zwei miteinander verbundenen Halbschalen. Es kann eine aerodynamische Hülle, die zum Beispiel von den Außenseiten der beiden Halbschalen gebildet ist, sowie einen oder mehrere Gurte aufweisen, beispielsweise aus glasfaser- oder kohlenstofffaserverstärktem Kunststoff. Die beiden Halbschalen können über einen oder mehrere Stege miteinander verbunden sein, die insbesondere zwischen zwei einander gegenüberliegenden Hauptgurten angeordnet sein können.

Der Blitzschutzleiter kann sich im Wesentlichen über die gesamte Länge des Windenergieanlagenrotorblatts erstrecken, insbesondere von einem Anschlusspunkt im Bereich der Blattwurzel bis in den Bereich der Blattspitze. Dort kann er mit der Blitzrezeptorbasis verbunden sein. Die elektrische Verbindung zwischen dem Blitzschutzleiter und den beiden Blitzrezeptoren kann über die Blitzrezeptorbasis hergestellt sein.

Die beiden Blitzrezeptoren bestehen aus einem elektrisch leitfähigen Material, vorzugsweise aus Metall, und sind an der Außenseite des Windenergieanlagenrotorblatts angeordnet, sodass sie etwa bündig mit der Saugseite bzw. mit der Druckseite abschließen. Sie können einander gegenüberliegend im Bereich der Blattspitze angeordnet sein, aber auch in einem Abstand davon. Es können auch mehrere, in unterschiedlichen Abständen von der Blattspitze angeordnete Paare von Blitzrezeptoren, denen jeweils eine Blitzrezeptorbasis zugeordnet ist, vorgesehen sein. Die Blitzrezeptoren und die Blitzrezeptorbasis können in einem Längsabschnitt oder in einem Bereich nahe der Hinterkante des Windenergieanlagenrotorblatts angeordnet sein, in dem der Abstand zwischen Saug- und Druckseite so gering ist, dass ein Zugang zum Inneren des Rotorblatts nicht ohne weiteres möglich ist. Beispielsweise kann der Abstand 30 cm oder weniger oder 20 cm oder weniger betragen.

Wesentlicher Bestandteil der erfindungsgemäßen Blitzrezeptorbasis sind die beiden Befestigungsringe, die eng benachbart zueinander angeordnet sind. Die Außenseiten der Befestigungsringe sind in einem Abstand von weniger als einem Außendurchmesser eines Befestigungsrings angeordnet. Jeder Befestigungsring weist ein Innengewinde auf, in das einer der beiden Blitzrezeptoren eingeschraubt ist. Hierzu kann der Blitzrezeptor einen bolzenförmigen Abschnitt mit einem entsprechenden Außengewinde aufweisen. Im einfachsten Fall bestehen die Blitzrezeptoren aus einem Gewindebolzen mit einem zum Beispiel scheibenförmigen Kopf. Auch eine mehrteilige Ausführung der Blitzrezeptoren ist möglich, beispielsweise mit einer Scheibe, in die ein Gewindebolzen eingesetzt ist. Die Gewinde sind so dimensioniert, dass über die Schraubverbindung ein Blitzstrom von beispielsweise 200 kA beschädigungsfrei abgeleitet werden kann.

Die erfindungsgemäße Blitzrezeptorbasis weist sehr kompakte Abmessungen auf. Zugleich ermöglicht sie eine sichere Befestigung der beiden Blitzrezeptoren und eine beschädigungsfreie Ableitung des Blitzstroms. Wegen ihrer kompakten Gestalt ist sie besonders materialsparend. Ein weiterer Vorteil besteht darin, dass die Blitzrezeptorbasis aufgrund ihrer kompakten Form eine sehr geringe Attraktivität für Blitze besitzt, wodurch die Wahrscheinlichkeit eines Blitzschlags an einem Blitzrezeptor vorbei in die Rezeptorbasis wesentlich reduziert wird. Die Befestigungsringe sind jeweils ringförmig um das Innengewinde herum geschlossen. Sie können kreisringförmig sein.

In einer Ausgestaltung beträgt ein Kantenradius an den Außenumfängen der beiden Befestigungsringe 3 mm oder mehr. Solche stark abgerundeten Kanten wirken lokalen Feldstärkemaxima entgegen und senken die Attraktivität der Blitzrezeptorbasis für einen Blitzschlag zusätzlich.

In einer Ausgestaltung sind die beiden Befestigungsringe seitlich nebeneinander angeordnet. Bei dieser Anordnung kann die Höhe der gesamten Blitzrezeptorbasis im Wesentlichen auf die Länge der Innengewinde beschränkt sein, sodass die Blitzrezeptorbasis auch in Bereichen des Windenergieanlagenrotorblatts mit sehr geringer Profildicke Platz findet. Außerdem können die Blitzrezeptoren tief in die Innengewinde eingeschraubt bzw. durch die Befestigungsringe hindurch geschraubt werden, ohne dass die Gewindebolzen der Blitzrezeptoren aneinander stoßen.

In einer Ausgestaltung weisen die beiden Befestigungsringe jeweils eine durch den Mittelpunkt des Befestigungsrings verlaufende Längsachse auf. Die beiden Längsachsen sind in einem Winkel im Bereich von 0° bis 30° zueinander angeordnet, sodass eine der Längsachsen die Saugseite und die andere der Längsseiten die Druckseite senkrecht schneidet. Bei einer Anordnung der Blitzrezeptoren zwischen einer Profilendkante und einer Position mit maximaler Profildicke kann der Winkel insbesondere im Bereich von 3° bis 20° liegen. In diesem Fall gibt die Gestalt der Blitzrezeptorbasis bereits die richtige Winkelanordnung der beiden Blitzrezeptoren zueinander vor, sodass bei Befestigung der Blitzrezeptorbasis im Rotorblatt in der vorgesehenen Position die richtige Anordnung der beiden Blitzrezeptoren festgelegt ist.

In einer Ausgestaltung weist die Blitzrezeptorbasis einen Befestigungsabschnitt auf, der mit dem Blitzschutzleiter verbunden und zwischen den beiden Befestigungsringen angeordnet ist. Der Befestigungsabschnitt kann beispielsweise rohr- oder stabförmig und mit dem Blitzschutzleiter verschweißt sein. Die Anordnung des Befestigungsabschnitts zwischen den beiden Befestigungsringen trägt zum kompakten Aufbau der Blitzrezeptorbasis bei. Insbesondere kann die Blitzrezeptorbasis im Wesentlichen oder ausschließlich aus den beiden Befestigungsringen und dem Befestigungsabschnitt bestehen.

In einer Ausgestaltung sind die beiden Befestigungsringe miteinander und/oder mit dem Befestigungsabschnitt verschweißt. In diesem Fall können insbesondere die Befestigungsringe besonders kostengünstig gefertigt werden, zum Beispiel als Drehteile. Alternativ kann die Blitzrezeptorbasis einstückig gefertigt werden, zum Beispiel als Gesenkschmiedeteil.

In einer Ausgestaltung weisen die beiden Befestigungsringe einen kleineren Außendurchmesser auf als die Blitzrezeptoren. Dadurch ist die Blitzrezeptorbasis relativ zu den Blitzrezeptoren nochmals weniger attraktiv für einen einschlagenden Blitz.

Die oben genannte Aufgabe wird ebenfalls gelöst durch das Verfahren mit den Merkmalen des Anspruchs 8. Vorteilhafte Ausgestaltungen sind in den sich anschließenden Unteransprüchen angegeben.

Das Verfahren dient zur Herstellung eines Windenergieanlagenrotorblatts und weist die folgenden Schritte auf:
- Bereitstellen zweier Rotorblatthalbschalen,
- Bereitstellen einer einteiligen Blitzrezeptorbasis, die einen ersten Befestigungsring mit einem ersten Innengewinde und einen zweiten Befestigungsring mit einem zweiten Innengewinde aufweist,
- Einschrauben einer ersten Schraube in das erste Innengewinde und einer zweiten Schraube in das zweite Innengewinde,
- Befestigen der Blitzrezeptorbasis an einer Innenseite einer der Rotorblatthalbschalen,
- Zusammenfügen der beiden Rotorblatthalbschalen,
- Herstellen einer ersten Bohrung durch eine Wandung einer der Rotorblatthalbschalen im Bereich der ersten Schraube und einer zweiten Bohrung durch eine Wandung der anderen Rotorblatthalbschale im Bereich der zweiten Schraube,
- Entfernen der beiden Schrauben durch die jeweilige Bohrung hindurch,
- Einschrauben eines ersten Blitzrezeptors durch die erste Bohrung in das erste Innengewinde und eines zweiten Blitzrezeptors durch die zweite Bohrung in das zweite Innengewinde.

Zu den Merkmalen und Vorteilen des Verfahrens wird zunächst auf die vorstehenden Erläuterungen des Windenergieanlagenrotorblatts verwiesen, die entsprechend gelten. Das Verfahren kann insbesondere zur Herstellung eines Windenergieanlagenrotorblatts mit den Merkmalen eines der hierauf gerichteten Ansprüche eingesetzt werden. Das Verfahren stellt eine einfache und praktikable Möglichkeit zur Herstellung eines solchen Windenergieanlagenrotorblatts dar.

Bei dem erfindungsgemäßen Verfahren wird die einteilige Blitzrezeptorbasis zunächst an einer Innenseite einer der Rotorblatthalbschalen befestigt, beispielsweise mit Laminatlagen und einem Klebstoff, etwa Klebeharz, die im Bereich des Befestigungsabschnitts oder des an diesen angeschlossenen Blitzschutzleiters aufgebracht werden. Die beiden in die Innengewinde der Blitzrezeptorbasis eingeschraubten Schrauben verhindern hierbei sowie beim Zusammenfügen der beiden Rotorblatthalbschalen, in der Regel ebenfalls unter Verwendung von Klebstoff, zuverlässig ein Eindringen von Klebstoff oder sonstigen Verunreinigungen in die Gewindebohrungen der Blitzrezeptorbasis. Zugleich können die beiden Schrauben als Orientierung bei der Herstellung der beiden Bohrungen durch die Wandungen der beiden Halbschalen dienen, denn ihre Anordnung im aus den beiden Rotorblatthalbschalen zusammengefügten Rotorblatt kennzeichnet die Position der beiden Innengewinde, in die die Blitzrezeptoren eingeschraubt werden.

Durch die Verwendung einer vorgefertigten Blitzrezeptorbasis, die bereits die beiden Gewindebohrungen aufweist, und das Herstellen der Bohrungen durch die Rotorblattwandungen erst nach der Befestigung der Blitzrezeptorbasis wird eine besonders einfache und wenig fehleranfällige Montage der gesamten Blitzschutzeinrichtung erzielt.

In einer Ausgestaltung weist das Verfahren den weiteren Schritt auf:
- Identifizieren der Position einer der beiden Schrauben von einer Außenseite der zusammengefügten Halbschalen aus auf optischem Wege.

Wie bereits erwähnt, kann die Anordnung der Schrauben als Orientierung für die Herstellung der Bohrungen durch die Rotorblattwandungen dienen. Grundsätzlich kann die Position der Schrauben hierzu auf beliebige Weise festgestellt werden, beispielsweise unter Verwendung von Magneten. Bei der Verwendung von ausreichend großen Schrauben bevorzugt mit einem charakteristisch strukturierten Schraubenkopf, insbesondere mit einem Innensechskant, ist es in vielen Fällen jedoch möglich, die beiden Schrauben durch die Rotorblattwandung hindurch mit bloßem Auge zu erkennen. Das Herstellen der Bohrungen an der richtigen Stelle ist dadurch besonders einfach.

In einer Ausgestaltung schließen die in die Innengewinde eingeschraubten Blitzrezeptoren bündig mit einer Außenseite der betreffenden Rotorblatthalbschale ab, ohne die sie umgebende Bohrung zu berühren. Mit anderen Worten wird die Bohrung so groß ausgeführt, dass um die eingeschraubten Blitzrezeptoren herum ein Freiraum verbleibt. Die Befestigung der Blitzrezeptoren erfolgt ausschließlich über die Blitzrezeptorbasis, und eine Krafteinwirkung auf die Blitzrezeptoren insbesondere bei einer elastischen Verformung des Windenergieanlagenrotorblatts tritt nicht auf. Dies trägt zu einer dauerhaften Befestigung der Blitzschutzeinrichtung bei.

In einer Ausgestaltung weist das Verfahren den weiteren Schritt auf:
- Schließen der Spalte zwischen den Blitzschutzrezeptoren und den sie umgebenden Bohrungen nach dem Einschrauben der beiden Blitzrezeptoren.

Insbesondere können die Spalte mit einer dauerelastischen Masse geschlossen werden. Dadurch wird eine Abdichtung des Innenraums des Windenergieanlagenrotorblatts erreicht, ohne dass von der Rotorblattwandung Kräfte auf die Blitzschutzeinrichtung ausgeübt werden können.

In einer Ausgestaltung werden die Schrauben so weit in die Rezeptorbasis eingeschraubt, dass die Köpfe der Schrauben nach dem Zusammenfügen der beiden Rotorblatthalbschalen jeweils in einem Abstand von weniger als 10 mm von der Innenseite einer der Rotorblatthalbschalen angeordnet sind. Bevorzugt kann ein noch kleinerer Abstand von beispielsweise weniger als 5 mm gewählt werden. Eine Anordnung der Schrauben möglichst unmittelbar unterhalb der Innenseite der jeweiligen Rotorblatthalbschale vereinfacht das Auffinden der Schrauben von außen.

In einer Ausgestaltung wird mit einer der Schrauben eine Befestigungsplatte an der Blitzrezeptorbasis befestigt und zum Befestigen der Blitzrezeptorbasis an der Innenseite einer der Rotorblatthalbschalen wird die Befestigungsplatte mit der Innenseite der Rotorblatthalbschale verklebt. Die Befestigungsplatte ermöglicht eine einfache und relativ großflächige Verklebung mit der Rotorblatthalbschale. Zusätzlich kann die Blitzrezeptorbasis selbst mit der Innenseite der Rotorblatthalbschale bzw. mit der Befestigungsplatte verklebt werden. Ein besonderer Vorteil besteht darin, dass nach der Befestigung der Befestigungsplatte an der Innenseite der Rotorblatthalbschale ein Nachjustieren der Position der Blitzrezeptorbasis zumindest durch Verdrehen noch möglich ist. Die Blitzrezeptorbasis kann somit einfach exakt ausgerichtet werden, bevor sie endgültig fixiert wird. Außerdem kann der Kopf der zum Befestigen der Befestigungsplatte an der Blitzrezeptorbasis verwendeten Schraube in die Befestigungsplatte eingelassen werden, sodass er bündig mit deren Oberfläche abschließt. Er befindet sich dann nach dem Verkleben der Befestigungsplatte mit der Rotorblatthalbschale unmittelbar an der Innenseite der Rotorblatthalbschale, sodass er von außen besonders gut sichtbar ist.

Nachfolgend wird die Erfindung anhand eines in Figuren dargestellten Ausführungsbeispiels näher erläutert. Es zeigen:
- Fig. 1: ein erfindungsgemäßes Windenergieanlagenrotorblatt in einer vereinfachten, perspektivischen Darstellung,
- Fig. 2a: eine Blitzrezeptorbasis des Windenergieanlagenrotorblatts aus Fig. 1 in einer perspektivischen Darstellung,
- Fig. 2b: die Blitzrezeptorbasis auf Fig. 2a in einer Draufsicht,
- Fig. 3: einen Befestigungsring der Blitzrezeptorbasis aus Fig. 2a/b in drei unterschiedlichen Ansichten,
- Fig. 4: den Befestigungsabschnitt der Blitzrezeptorbasis aus Fig. 2a/b in drei unterschiedlichen Ansichten,
- Fig. 5: eine Detaildarstellung zur Befestigung der Blitzrezeptorbasis aus Fig. 2 an einer Rotorblatthalbschale in einer geschnittenen und schematischen Darstellung,
- Fig. 6: eine Detaildarstellung der zwischen den beiden Rotorblatthalbschalen befestigten Blitzrezeptorbasis aus Fig. 2 vor dem Einbringen der Bohrungen,
- Fig. 7: die Anordnung aus Fig. 6 nach dem Herstellen der Bohrungen,
- Fig. 8: die Anordnung aus Fig. 7 mit eingeschraubten Blitzrezeptoren.

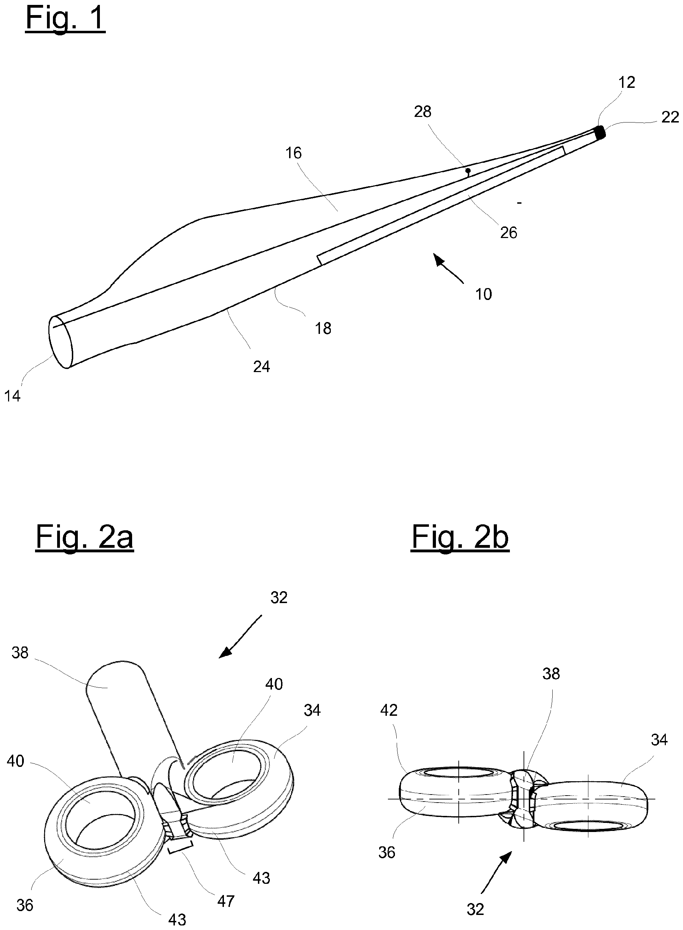

Das Windenergieanlagenrotorblatt 10 aus Fig. 1 hat eine Blattspitze 12, eine Blattwurzel 14, eine Druckseite 16 und eine Saugseite 18. Ein Blitzschutzleiter 20 führt von der Blattwurzel 14 bis in den Bereich der Blattspitze 12, wo er mit einem Blattspitzenblitzrezeptor 22 verbunden ist. Im Bereich der Profilnasenkante 24 ist als eine zusätzliche Option eine elektrische Heizeinrichtung 26 angedeutet.

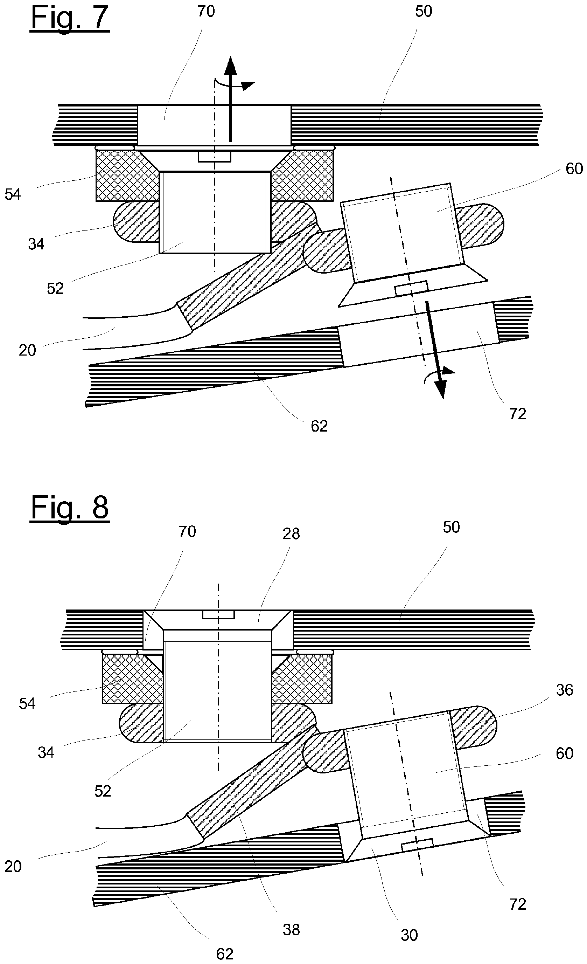

In einem Abstand von der Blattspitze 12 befindet sich ein auf der Druckseite 16 angeordneter Blitzrezeptor 28. Auf der Saugseite 18 liegt ihm ein weiterer Blitzrezeptor 30 (siehe Fig. 8) etwa gegenüber. Die beiden Blitzrezeptoren 28, 30 sind mit einer im Inneren des Windenergieanlagenrotorblatts 10 liegenden Blitzrezeptorbasis 32 (siehe zum Beispiel Fig. 2) verschraubt. Die Blitzrezeptorbasis 32 ist mit dem Blitzschutzleiter 20 verbunden.

Die Figuren 2a und 2b zeigen die Blitzrezeptorbasis 32, die zwei Befestigungsringe 34, 36 und einen dazwischen angeordneten Befestigungsabschnitt 38 aufweist. Die beiden Befestigungsringe 34, 36 sind eng benachbart angeordnet. Sie haben jeweils einen Außendurchmesser im Bereich von 30 mm bis 40 mm und weisen zwischen ihren Außenseiten 43 einen Abstand 47 im Bereich von 5 mm bis 20 mm auf. Jede der beiden Befestigungsringe 34, 36 weist ein M20-Innengewinde 40 auf.

Die beiden Befestigungsringe 34, 36 sind seitlich nebeneinanderliegend angeordnet. Wie in Fig. 2b deutlich zu sehen ist, liegen sie jedoch nicht exakt in einer Ebene, sondern sind relativ zueinander in einem Winkel von etwa 15° gekippt. Alle äußeren Kanten 42, insbesondere an den Außenumfängen der Befestigungsringe 34, 36, sind mit einem Radius von ca. 4 mm abgerundet.

Die Blitzrezeptorbasis 32 ist durch Verschweißen der beiden Befestigungsringe 34, 36 mit dem zwischen den beiden Befestigungsringen 34, 36 angeordneten Befestigungsabschnitt 38 zusammengefügt.

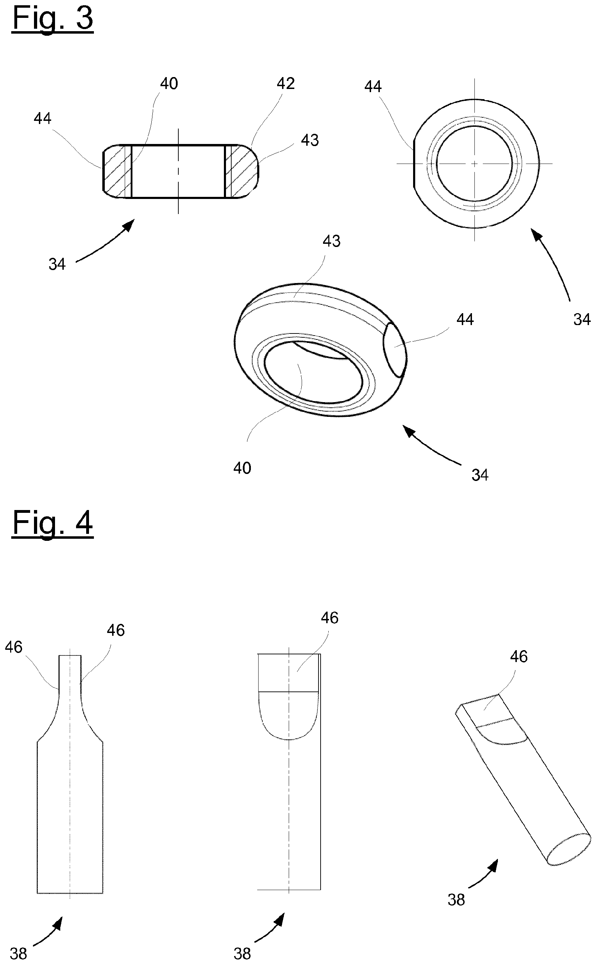

Fig. 3 zeigt einen Befestigungsring 34 der Blitzrezeptorbasis 32 oben links im Querschnitt, oben rechts in einer Draufsicht von oben und unten in einer perspektivischen Darstellung. Man erkennt insbesondere in der Querschnittsdarstellung gut die gerundeten Kanten 42 an den äußeren Umfängen sowie eine seitliche Abflachung 44 an der Außenseite 43, die eine Kontaktfläche für das Verschweißen mit dem Befestigungsabschnitt 38 bildet.

Fig. 4 zeigt den Befestigungsabschnitt 38 in zwei Draufsichten aus unterschiedlichen Richtungen und zusätzlich in einer perspektivischen Darstellung. Der Befestigungsabschnitt 38 hat eine kreiszylindrische Grundform mit einem Durchmesser im Bereich von 10 mm bis 20 mm. An einem Ende, das zwischen den beiden Befestigungsringen 34, 36 angeordnet wird, gibt es zwei einander gegenüberliegende Abflachungen 46, die für einen großflächigen Kontakt mit den Abflachungen 44 der Befestigungsringe 34, 36 beim Verschweißen sorgen.

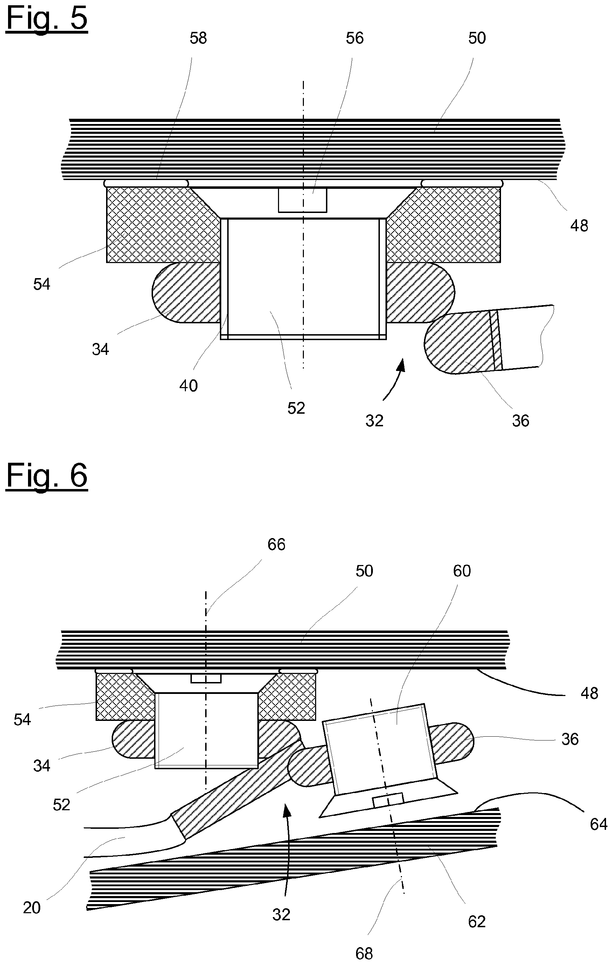

Fig. 5 zeigt schematisch, wie die Blitzrezeptorbasis 32 an der Innenseite 48 einer Rotorblatthalbschale 50 befestigt wird. Im unteren Teil der Figur erkennt man die beiden Befestigungsringe 34, 36 der Blitzrezeptorbasis 32. In das Innengewinde 40 des Befestigungsrings 34 ist eine erste Schraube 52 eingeschraubt, nämlich eine Senkkopfschraube. Mit dieser Senkkopfschraube ist eine Befestigungsplatte 54, die im Beispiel aus einem Glasfaserverbundwerkstoff besteht, mit der Blitzrezeptorbasis 32 verschraubt. Die Oberseite des Senkkopfs der ersten Schraube 52, die einen Innensechskant 56 aufweist, schließt etwa bündig mit der Oberseite der Befestigungsplatte 54 ab.

Die Befestigungsplatte 54 ist mit Klebstoff 58 an der Innenseite 48 der Rotorblatthalbschale 50 befestigt. Die Oberseite der Schraube 52 befindet sich somit in unmittelbarer Nähe der Innenseite 48, sodass die Schraube 52 von außen besonders gut sichtbar ist.

Fig. 6 zeigt eine andere Ansicht auf die Blitzrezeptorbasis 32, in der die beiden Befestigungsringe 34, 36 und zusätzlich der Befestigungsabschnitt 38 erkennbar sind. In der Darstellung der Fig. 6 ist weiterhin die Befestigungsplatte 54 über die erste Schraube 52 mit der Blitzrezeptorbasis 32 verschraubt; und die Befestigungsplatte 54 ist mit der Innenseite 48 der Rotorblatthalbschale 50 verklebt. In den Befestigungsring 36 ist eine zweite Schraube 60 eingeschraubt. Anschließend wurde die Rotorblatthalbschale 50 mit einer weiteren Rotorblatthalbschale 62 zusammengefügt, sodass die Blitzrezeptorbasis 32 vollständig im Inneren des Windenergieanlagenrotorblatts 10 angeordnet ist.

Die zweite Schraube 60 ist ebenfalls eine Senkkopfschraube. Sie ist so weit in den Befestigungsring 36 eingeschraubt, dass ihr Kopf einen Abstand von weniger als 10 mm von der Innenseite 64 der weiteren Rotorblatthalbschale 62 aufweist.

Die Längsachsen 66, 68 der beiden Schrauben, die den Längsachsen der beiden Gewindebohrungen der Befestigungsringe 34, 36 entsprechen, sind in der Fig. 6 strichpunktiert eingezeichnet. Man erkennt, dass die Längsachse 66 senkrecht zur Rotorblatthalbschale 50 und die andere Längsachse 68 senkrecht zur weiteren Rotorblatthalbschale 62 angeordnet ist.

In der Anordnung der Fig. 6 sind die beiden Schrauben 52, 60 durch die Wandungen der Rotorblatthalbschalen 50, 62 hindurch von außen sichtbar, sodass deren Position auf optischem Wege identifiziert werden kann. Dies ermöglicht das Herstellen der in der Fig. 7 gezeigten Bohrungen 70, 72 durch die Wandung der Rotorblatthalbschale 50 bzw. die Wandung der weiteren Rotorblatthalbschale 62 hindurch. Der Durchmesser der Bohrungen 70, 72 ist etwas größer gewählt als der Durchmesser der Köpfe der Schrauben 52, 60, sodass diese einfach aus den Befestigungsringen 34, 36 herausgeschraubt und durch die Bohrungen 70, 72 hindurch entfernt werden können.

Anschließend werden die beiden Blitzrezeptoren 28, 30 durch die Bohrungen 70, 72 hindurch in die Innengewinde 49 der Befestigungsringe 34, 36 eingeschraubt, wie in der Fig. 8 dargestellt. Die Blitzrezeptoren 28, 30 sind als Senkkopfschrauben aus Edelstahl ausgeführt und so weit in die Innengewinde 40 der Befestigungsringe 34, 36 eingeschraubt, dass ihre Stirnseiten bündig mit den Außenseiten der Rotorblatthalbschalen 50, 62 abschließen. Die zwischen den Bohrungen 70, 72 und den Blitzrezeptoren 28, 30 verbleibenden Spalte werden mit einer dauerelastischen Masse gefüllt.

### Liste der verwendeten Bezugszeichen:

- 10: Windenergieanlagenrotorblatt
- 12: Blattspitze
- 14: Blattwurzel
- 16: Druckseite
- 18: Saugseite
- 20: Blitzschutzleiter
- 22: Blattspitzenblitzrezeptor
- 24: Profilnasenkante
- 26: Heizeinrichtung
- 28, 30: Blitzrezeptor
- 32: Blitzrezeptorbasis
- 34, 36: Befestigungsring
- 38: Befestigungsabschnitt
- 40: Innengewinde
- 42: Kante
- 43: Außenseite
- 44, 46: Abflachung
- 47: Abstand zwischen Außenseiten
- 48: Innenseite
- 50: Rotorblatthalbschale
- 52: Erste Schraube
- 54: Befestigungsplatte
- 56: Innensechskant
- 58: Klebstoff
- 60: Zweite Schraube
- 62: Weitere Rotorblatthalbschale
- 64: Innenseite
- 66, 68: Längsachse
- 70, 72: Bohrung

## Patentansprüche

1. Windenergieanlagenrotorblatt (10) mit einer Blattwurzel (14), einem Blitzschutzleiter (20) zur Ableitung eines Blitzstroms zur Blattwurzel (14), einer Saugseite (18), einer Druckseite (16), einem an der Saugseite (18) angeordneten Blitzrezeptor (30), einem an der Druckseite (16) angeordneten Blitzrezeptor (28) und einer in dem Windenergieanlagenrotorblatt (10) angeordneten, einteilig ausgebildeten Blitzrezeptorbasis (32), an der die beiden Blitzrezeptoren (28, 30) und der Blitzschutzleiter (20) befestigt sind, **dadurch gekennzeichnet, dass** die Blitzrezeptorbasis (32) zwei Befestigungsringe (34, 36) umfasst, die jeweils ein Innengewinde (40), in das einer der beiden Blitzrezeptoren (28, 30) eingeschraubt ist, und einen Außendurchmesser und eine Außenseite (43) aufweisen, wobei die Außenseiten (43) der Befestigungsringe in einem Abstand (47) von weniger als einem Außendurchmesser voneinander angeordnet sind.

2. Windenergieanlagenrotorblatt (10) nach Anspruch 1, **dadurch gekennzeichnet, dass** ein Kantenradius an den Außenumfängen der beiden Befestigungsringe (34, 36) 3 mm oder mehr beträgt.

3. Windenergieanlagenrotorblatt (10) nach Anspruch 1 oder 2, **dadurch gekennzeichnet, dass** die beiden Befestigungsringe (34, 36) seitlich nebeneinander angeordnet sind.

4. Windenergieanlagenrotorblatt (10) nach einem der Ansprüche 1 bis 3, **dadurch gekennzeichnet, dass** die beiden Befestigungsringe (34, 36) jeweils eine Längsachse (66, 68) aufweisen und die beiden Längsachsen (66, 68) in einem Winkel im Bereich von 0° bis 30° zueinander angeordnet sind, so dass eine der Längsachsen (66) die Saugseite (18) und die andere der Längsachsen (68) die Druckseite (16) senkrecht schneidet.

5. Windenergieanlagenrotorblatt (10) nach einem der Ansprüche 1 bis 4, **dadurch gekennzeichnet, dass** die Blitzrezeptorbasis (32) einen Befestigungsabschnitt (38) aufweist, der mit dem Blitzschutzleiter (20) verbunden und zwischen den beiden Befestigungsringen (34, 36) angeordnet ist.

6. Windenergieanlagenrotorblatt (10) nach einem der Ansprüche 1 bis 5, **dadurch gekennzeichnet, dass** die beiden Befestigungsringe (34, 36) miteinander und/oder mit dem Befestigungsabschnitt (38) verschweißt sind.

7. Windenergieanlagenrotorblatt (10) nach einem der Ansprüche 1 bis 6, **dadurch gekennzeichnet, dass** jeder der beiden Befestigungsringe (34, 36) einen kleineren Außendurchmesser aufweist als der zugeordnete Blitzrezeptor (28, 30).

8. Verfahren zur Herstellung eines Windenergieanlagenrotorblatts (10) mit den folgenden Schritten:
• Bereitstellen zweier Rotorblatthalbschalen (50, 62),
• Bereitstellen einer einteiligen Blitzrezeptorbasis (32), die einen ersten Befestigungsring (34) mit einem ersten Innengewinde (40) und einen zweiten Befestigungsring (36) mit einem zweiten Innengewinde (40) aufweist,
• Einschrauben einer ersten Schraube (52) in das erste Innengewinde (40) und einer zweiten Schraube (60) in das zweite Innengewinde (40),
• Befestigen der Blitzrezeptorbasis (32) an einer Innenseite (48) einer der Rotorblatthalbschalen (50, 62),
• Zusammenfügen der beiden Rotorblatthalbschalen (50, 62),
• Herstellen einer ersten Bohrung (70) durch eine Wandung einer der Rotorblatthalbschalen (50, 62) im Bereich der ersten Schraube (52) und einer zweiten Bohrung (72) durch eine Wandung der anderen Rotorblatthalbschale (62) im Bereich der zweiten Schraube (60),
• Entfernen der beiden Schrauben (52, 60) durch die jeweilige Bohrung (70, 72) hindurch,
• Einschrauben eines ersten Blitzrezeptors (28) durch die erste Bohrung (70) in das erste Innengewinde (40) und eines zweiten Blitzrezeptors (30) durch die zweite Bohrung (72) in das zweite Innengewinde (40).

9. Verfahren nach Anspruch 8, **gekennzeichnet durch** den weiteren Schritt:
• Identifizieren der Position einer der beiden Schrauben (52, 60) von einer Außenseite der zusammengefügten Rotorblatthalbschalen (50, 62) aus auf optischem Wege.

10. Verfahren nach Anspruch 8 oder 9, **dadurch gekennzeichnet, dass** die in die Innengewinde (40) eingeschraubten Blitzrezeptoren (28, 30) bündig mit einer Außenseite der betreffenden Rotorblatthalbschale (50, 62) abschließen, ohne die sie umgebende Bohrung (70, 72) zu berühren.

11. Verfahren nach Anspruch 10, **gekennzeichnet durch** den weiteren Schritt:
• Schließen der Spalte zwischen den Blitzrezeptoren (28, 30) und den sie umgebenden Bohrungen (70, 72) nach dem Einschrauben der beiden Blitzrezeptoren (28, 30).

12. Verfahren nach einem der Ansprüche 8 bis 11, **dadurch gekennzeichnet, dass** die Schrauben (52, 60) so weit in die Rezeptorbasis (32) eingeschraubt werden, dass die Köpfe der Schrauben (52, 60) nach dem Zusammenfügen der beiden Rotorblatthalbschalen (50, 62) jeweils in einem Abstand von weniger als 10 mm von der Innenseite (48) einer der Rotorblatthalbschalen (50) angeordnet sind.

13. Verfahren nach einem der Ansprüche 8 bis 12, **dadurch gekennzeichnet, dass** mit einer der Schrauben (52, 60) eine Befestigungsplatte (54) an der Blitzrezeptorbasis (32) befestigt wird und zum Befestigen der Blitzrezeptorbasis (32) an der Innenseite (48) einer der Rotorblatthalbschalen (50, 62) die Befestigungsplatte (54) mit der Innenseite (48) der Rotorblatthalbschale (50, 62) verklebt wird.

## Claims

1. A wind turbine rotor blade (10) comprising a blade root (14), a lightning protection conductor (20) for dissipating a lightning current toward the blade root (14), a suction side (18), a pressure side (16), a lightning receptor (30) arranged on the suction side (18), a lightning receptor (28) arranged on the pressure side (16), and an integrally formed lightning receptor base (32), which is arranged in the wind turbine rotor blade (10) and on which the two lightning receptors (28, 30) and the lightning protection conductor (20) are fastened, wherein the lightning receptor base (32) comprises two fastening rings (34, 36), which each have an internal thread (40), into which one of the two lightning receptors (28, 30) is screwed, and an outer diameter and an outer side (43), wherein the outer sides (43) of the fastening rings are arranged with a spacing (47) of less than one outer diameter from one another.

2. The wind turbine rotor blade (10) as claimed in claim 1, wherein an edge radius at the outer circumferences of the two fastening rings (34, 36) is 3 mm or more.

3. The wind turbine rotor blade (10) as claimed in claim 1 or 2, wherein the two fastening rings (34, 36) are arranged laterally next to one another.

4. The wind turbine rotor blade (10) as claimed in one of claims 1 to 3, wherein the two fastening rings (34, 36) each have a longitudinal axis (66, 68), and the two longitudinal axes (66, 68) are arranged at an angle in the range of from 0° to 30° with respect to one another so that one of the longitudinal axes (66) perpendicularly intersects the suction side (18) and the other of the longitudinal axes (68) perpendicularly intersects the pressure side (16).

5. The wind turbine rotor blade (10) as claimed in one of claims 1 to 4, wherein the lightning receptor base (32) has a fastening section (38), which is connected to the lightning protection conductor (20) and is arranged between the two fastening rings (34, 36).

6. The wind turbine rotor blade (10) as claimed in one of claims 1 to 5, wherein the two fastening rings (34, 36) are welded to one another and/or to the fastening section (38).

7. The wind turbine rotor blade (10) as claimed in one of claims 1 to 6, wherein each of the two fastening rings (34, 36) has a smaller outer diameter than the associated lightning receptor (28, 30).

8. A method for producing a wind turbine rotor blade (10) comprising the following steps:
• providing two rotor blade half-shells (50, 62),
• providing an integral lightning receptor base (32), which has a first fastening ring (34) with a first internal thread (40) and a second fastening ring (36) with a second internal thread (40),
• screwing a first screw (52) into the first internal thread (40) and a second screw (60) into the second internal thread (40),
• fastening the lightning receptor base (32) on an inner side (48) of one of the rotor blade half-shells (50, 62),
• assembling the two rotor blade half-shells (50, 62),
• producing a first bore (70) through a wall of one of the rotor blade half-shells (50, 62) in the region of the first screw (52) and a second bore (72) through a wall of the other rotor blade half-shell (62) in the region of the second screw (60),
• removing the two screws (52, 60) through the respective bore (70, 72),
• screwing a first lightning receptor (28) through the first bore (70) into the first internal thread (40) and a second lightning receptor (30) through the second bore (72) into the second internal thread (40).

9. The method as claimed in claim 8, **characterized by** the further following step:
• identifying the position of one of the two screws (52, 60) optically from an outer side of the assembled rotor blade half-shells (50, 62).

10. The method as claimed in claim 8 or 9, wherein the lightning receptors (28, 30) screwed into the internal thread (40) terminate flush with an outer side of the rotor blade half-shell (50, 62) in question without touching the bore (70, 72) surrounding them.

11. The method as claimed in claim 10, **characterized by** the following further step:
• closing the gaps between the lightning receptors (28, 30) and the bores (70, 72) surrounding them once the two lightning receptors (28, 30) have been screwed in.

12. The method as claimed in one of claims 8 to 11, wherein the screws (52, 60) are screwed so far into the receptor base (32) that the heads of the screws (52, 60) are each arranged with a spacing of less than 10 mm from the inner side (48) of one of the rotor blade half-shells (50) once the two rotor blade half-shells (50, 62) have been assembled.

13. The method as claimed in one of claims 8 to 12, wherein a fastening plate (54) is fastened on the lightning receptor base (32) with one of the screws (52, 60) and, in order to fasten the lightning receptor base (32) on the inner side (48) of one of the rotor blade half-shells (50, 62), the fastening plate (54) is adhesively bonded to the inner side (48) of the rotor blade half-shell (50, 62).

## Revendications

1. Pale de rotor d'éolienne (10) avec une base de pale (14), un parafoudre (20) destiné à dériver un courant de foudre vers la base de pale (14), un côté aspiration (18), un côté pression (16), un récepteur de foudre (30) disposé sur le côté aspiration (18), un récepteur de foudre (28) disposé sur le côté pression (16) et une base de récepteur de foudre (32) conçue d'un seul tenant, disposée dans la pale de rotor d'éolienne (10), à laquelle sont fixés les deux récepteurs de foudre (28, 30) et le parafoudre (20), **caractérisée en ce que** la base de récepteur de foudre (32) comporte deux anneaux de fixation (34, 36) présentant respectivement un filet intérieur (40) dans lequel est vissé l'un des deux récepteurs de foudre (28, 30), et présentant un diamètre extérieur et un côté extérieur (43), les côtés extérieurs (43) des anneaux de fixation étant disposés à une distance (47) inférieure à un diamètre extérieur l'un de l'autre.

2. Pale de rotor d'éolienne (10) selon la revendication 1, **caractérisée en ce qu'**un rayon d'arête au niveau des pourtours extérieurs des deux anneaux de fixation (34, 36) mesure 3 mm ou plus.

3. Pale de rotor d'éolienne (10) selon la revendication 1 ou 2, **caractérisée en ce que** les deux anneaux de fixation (34, 36) sont disposés côte à côte latéralement.

4. Pale de rotor d'éolienne (10) selon l'une des revendications 1 à 3, **caractérisée en ce que** les deux anneaux de fixation (34, 36) présentent respectivement un axe longitudinal (66, 68) et les deux axes longitudinaux (66, 68) sont disposés de manière à former un angle compris entre 0° et 30° l'un par rapport à l'autre, de telle façon que l'un des axes longitudinaux (66) coupe perpendiculairement le côté aspiration (18) et l'autre des axes longitudinaux (68) coupe perpendiculairement le côté pression (16).

5. Pale de rotor d'éolienne (10) selon l'une des revendications 1 à 4, **caractérisée en ce que** la base de récepteur de foudre (32) présente une section de fixation (38) reliée au parafoudre (20) et disposée entre les deux anneaux de fixation (34, 36).

6. Pale de rotor d'éolienne (10) selon l'une des revendications 1 à 5, **caractérisée en ce que** les deux anneaux de fixation (34, 36) sont soudés l'un à l'autre et/ou à la section de fixation (38).

7. Pale de rotor d'éolienne (10) selon l'une des revendications 1 à 6, **caractérisée en ce que** chacun des deux anneaux de fixation (34, 36) présente un diamètre extérieur inférieur à celui du récepteur de foudre (28, 30) correspondant.

8. Procédé pour la fabrication d'une pale de rotor d'éolienne (10), comprenant les étapes suivantes :
• mise à disposition de deux demi-coquilles de pale de rotor (50, 62),
• mise à disposition d'une base de récepteur de foudre (32) monobloc, laquelle présente un premier anneau de fixation (34) avec un premier filet intérieur (40) et un deuxième anneau de fixation (36) avec un deuxième filet intérieur (40),
• vissage d'une première vis (52) dans le premier filet intérieur (40) et d'une deuxième vis (60) dans le deuxième filet intérieur (40),
• fixation de la base de récepteur de foudre (32) sur un côté intérieur (48) de l'une des demi-coquilles de pale de rotor (50, 62),
• assemblage des deux demi-coquilles de pale de rotor (50, 62),
• réalisation d'un premier perçage (70) à travers une paroi de l'une des demi-coquilles de pale de rotor (50, 62) dans la région de la première vis (52) et d'un deuxième perçage (72) à travers une paroi de l'autre demi-coquille de pale de rotor (62) dans la région de la deuxième vis (60),
• retrait des deux vis (52, 60) à travers le perçage (70, 72) respectif,
• vissage d'un premier récepteur de foudre (28) à travers le premier perçage (70) dans le premier filet intérieur (40) et d'un deuxième récepteur de foudre (30) à travers le deuxième perçage (72) dans le deuxième filet intérieur (40).

9. Procédé selon la revendication 8, **caractérisé par** l'étape supplémentaire suivante :
• identification de la position de l'une des deux vis (52, 60) par voie optique depuis un côté extérieur des demi-coquilles de pale de rotor (50, 62) assemblées.

10. Procédé selon la revendication 8 ou 9, **caractérisé en ce que** les récepteurs de foudre (28, 30) vissés dans les filets intérieurs (40) se terminent à fleur avec un côté extérieur de la demi-coquille de pale de rotor (50, 62) correspondante, sans toucher le perçage (70, 72) qui les entoure.

11. Procédé selon la revendication 10, **caractérisé par** l'étape supplémentaire suivante :
• fermeture de la fente entre les récepteurs de foudre (28, 30) et les perçages (70, 72) qui les entourent, après le vissage des deux récepteurs de foudre (28, 30).

12. Procédé selon l'une des revendications 8 à 11, **caractérisé en ce que** les vis (52, 60) sont vissées dans la base de récepteur (32) au point que les têtes des vis (52, 60) sont disposées respectivement à une distance de moins de 10 mm du côté intérieur (48) de l'une des demi-coquilles de pale de rotor (50) après l'assemblage des deux demi-coquilles de pale de rotor (50, 62).

13. Procédé selon l'une des revendications 8 à 12, **caractérisé en ce qu'**une plaque de fixation (54) est fixée à la base de récepteur de foudre (32) à l'aide de l'une des vis (52, 60), et **en ce que** pour fixer la base de récepteur de foudre (32) au côté intérieur (48) de l'une des demi-coquilles de pale de rotor (50, 62), la plaque de fixation (54) est collée avec le côté intérieur (48) de la demi-coquille de pale de rotor (50, 62).
